Europäisches Patentamt

European Patent Office

Office européen des brevets

(11) Publication number: **0 075 406**
**A1**

## (12) EUROPEAN PATENT APPLICATION

(21) Application number: **82304651.1**

(22) Date of filing: **03.09.82**

(51) Int. Cl.³: **F 24 J 3/02**

(30) Priority: **08.09.81 IL 63772**

(43) Date of publication of application: **30.03.83**
**Bulletin 83/13**

(84) Designated Contracting States: **AT BE CH DE FR GB IT LI LU NL SE**

(71) Applicant: **Artsieli, Yehuda, 18 Trumpeldor Street Neve Magen, Ramat Hasharon (IL)**
Applicant: **Heruth, B.M., 7 Tel-Aviv-Jaffo Road, Tel-Aviv (IL)**

(72) Inventor: **Artsieli, Yehuda, 18, Trumpeldor Street, Neve Magen Ramat Hasharon (IL)**

(74) Representative: **Barlow, Roy James et al, J.A.KEMP & CO. 14, South Square Gray's Inn, London WC1R 5EU (GB)**

(54) **Energy collector.**

(57) An energy absorber for solar collectors being a matrix of hollow rigid spheroids (17, 18, 19) adapted for the passage of a heat carrier liquid therethrough. Each spheroid comprises an upper transparent portion (29) and a lower energy-absorbing portion (31). If desired, mirrors may be provided for increasing the amount of incident light.

EP 0 075 406 A1

- 1 -

DESCRIPTION

"ENERGY COLLECTOR"


This invention is concerned with solar collectors and more particularly with energy absorbers for use in solar collectors.

Solar collectors are designed to convert solar radiation to other forms of energy such as heat. In general the solar collectors include energy absorbers such as tubes carrying a fluid. The purpose of the solar collector is to most efficiently cause the sun's radiation to fall upon the energy absorber to convert the radiation to heat with a minimum of losses.

In general there are two types of collectors; one is the image collector wherein the solar collector system includes devices for focusing the sun's rays on the absorber. Examples of focusing devices include parabolic disc or trough reflectors wherein the energy absorber is positioned at the focal point. Image collector systems usually require means for tracking the sun to ensure that the absorber remains at the focal point as the sun moves across the sky.

The other type of solar collector is the well-known planar type collector where the absorber is placed within a glass-covered enclosure facing in the direction of the equator and at an angle of 45° to the horizon to ensure receiving the maximum of impinging solar radiation during the daylight hours. Generally the absorber in such planar collectors comprises either tubing containing fluid coupled between an inlet header and an outlet header, or serpentine tubing running between an inlet and an outlet. The back of the container is generally heavily insulated to minimize heat loss.

- 2 -

Although such planar collectors have been in use for over a century, there are many problems with the presently available planar collectors that remain unsolved. In general these problems involve maximizing the efficiency of the collectors. For example, it is noted that there is a lack of focusing means in planar collectors. Attempts have been made to replace the top glass sheet of the planar collectors with a large lens to focus the sun's radiation onto the energy absorbers. These attempts have proved fruitless because of the high cost of such large lenses and because such lenses generally focus at a point and consequently defocus at all other points on the plane of the focal point away from the focal point.

Another problem with the present-day collectors concerns the tubing used in the energy absorbers. In general, the tubing must provide a sufficient area for convection and radiation to heat the fluid therein sufficiently for the purposes intended. With the large amounts of tubing required, the energy absorber is in general relatively heavy and requires relatively heavy framing for support. Thus the collector with a large amount of tubing, the large amount of insulation at the rear of the tubing, and the plate glass at the front, is a relatively heavy device and must be fairly large in area to heat up sufficiently to be useful and practical.

Yet another problem with the present-day flat or planar collectors is the relatively small acquisition angle provided by such collectors. The small acquisition angle results in a large amount of lost sunlight that does not properly impinge upon the flat collectors.

Further, attempts are continually being made in the field of solar collectors to increase the area of the energy absorber that is exposed to the heating effects of convection, conduction and radiation while attempting to minimize losses due to these same effects.

Accordingly it is an object of the present invention to provide a new and improved energy absorber for solar collectors in which the above-referred to disadvantages are substantially reduced or overcome.

According to the present invention there is provided an energy absorber for a solar collector comprising inlet and outlet means for a heat carrier fluid, characterised by a matrix of hollow rigid spheroids each having a light-admitting portion and an energy absorbent portion, said portions being so designed that incident light radiation is focused onto said energy-absorbent portion by said light-admitting portion.

The term "spheroid" is used herein in a broad sense and covers any spherical or spherical-like polyhedral structure. The object of the spheroids is to increase the acquisition angle to the sun's rays.

The spheroids are shaped to focus the sun's rays on the heat-absorbent portion of each of the spheroids for a large portion of the time that radiation is impinging on the matrix. In fact the spheroids are shaped to provide a heat-absorbent surface normal to the rays for substantially all angles of incidence. Also the spheroids tend to reflect radiation to adjacent spheroids. Thus, the matrix of spheroids enables the acquisition angle of the solar collectors to be increased. The spheroids also increase the area exposed to convection, that is the area exposed to the heated air within the collector caused by the solar heating of the air between a transparent cover on the solar collector and the heat-absorbent back units, usually coloured black. The sun's radiation focused on the heat-absorbent portion of the spheroid also passes through the fluid in the spheroid adding radiant energy to the heating of the fluid in the spheroid. Also according to one embodiment of the invention the connecting means between the spheroids are transparent at the tops thereof and have heat absorbent bottoms; therefore the solar radiation also heats the fluid in the conducting portions between the spheroids.

In a preferred embodiment the matrix comprises two moulded portions, each moulded portion containing a plurality of hemi-spheroidal forms in rows and columns. The two portions are connected together so that rows and columns of complete spheroids and interconnecting tubes are formed. The absorber thus formed is extremely light-weight and versatile. The absorber is then placed within a collector that comprises a casing with a transparent front portion. It should be noted that the spheroids increase the efficiency of the collector to such a degree that, within the scope of this invention, the collector can be used without the cumbersome glass covering.

The operation and utilization of the present invention will be more fully apparent from the description of a preferred embodiment taken in conjunction with the following drawings, in which:

Fig. 1 is a perspective view showing the energy-absorbing matrix of the present invention;

Fig. 2 is a plan view of a portion of the matrix of Fig. 1, drawn to a larger scale;

Fig. 3 is a sectional view taken on a plane through line III-III in Fig. 2 and looking in the direction of the arrows;

Fig. 4 is a schematic view showing the energy-absorbing matrix in a solar collector system;

Fig. 5 is a perspective view showing a matrix surrounded by an integral reflector.

Fig. 6 shows pictorially a series of reflective plates used in the energy absorber; and

- 5 -

Fig. 7 is a sectional view of a spheroid equipped with the reflective plates.

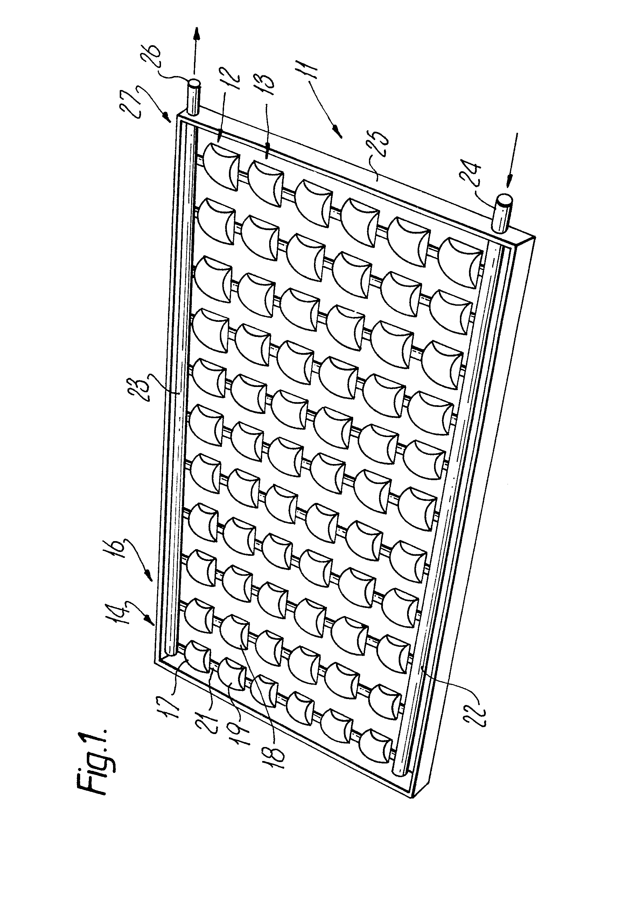

The energy collector 11 shown in Fig. 1 uses a matrix arrangement for its energy absorber unit.  The matrix arrangement comprises a plurality of rows such as rows 12 and 13 and a plurality of columns such as columns 14, 16 and 27  of identical spheroids such as 17 in column 14 and row 12, 18 in column 16 and row 13, and 19 in column 14 and row 13.

The connection between the spheroids is such that columns are connected in parallel.  To this end each spheroid of a column is interconnected by cylindrical tubes with the next spheroid immediately thereabove and therebelow in the same column.  Each of the columns is shown connected to headers such as cold water header 22 and hot water header 23.  The headers are in turn connected to a water inlet, shown at 24, connected to the cold water header and an outlet 26 connected to the hot water header 23.  The entire matrix is surrounded by a frame 25 and may be covered by a transparent plate, for example of glass.  The arrangement however enables the transparent plate to be discarded, if desired, thereby reducing transportation costs and difficulties as well as vulnerability to vandalism.

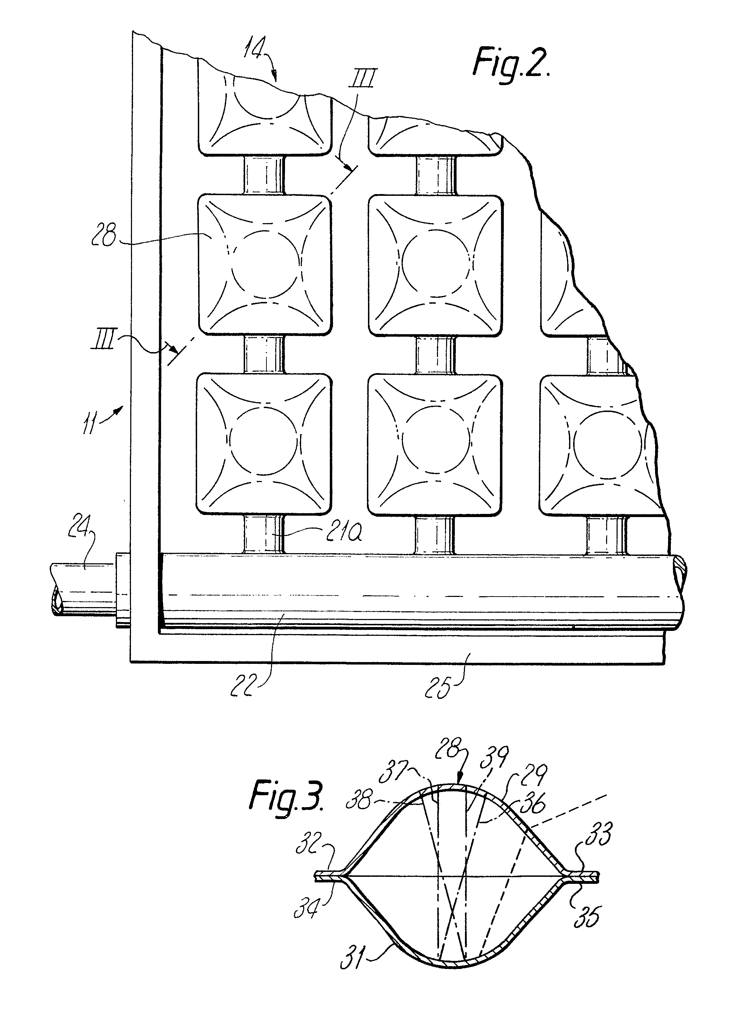

The plan view of Fig. 2 shows the arrangement of interconnected spheroids which dispenses with the usual tubing.  By examining a cross-section of one of the spheroids 28 that is connected to the cold water inlet 24 through the cold water header 22, cylindrical tubing such as tubing 21a, and another spheroid between the header 22 and the first spheroid 28, some of the advantages and features of the absorber in accordance with this invention will become apparent.

It should be noted that within the scope of the present invention the way of interconnecting the spheroids is not critical and it may be effected in different manners. For example, instead of the parallel-column connection of Figs. 1 and 2, it is possible to connect all spheroids in series. To this end the spheroids in each row may be connected in series and the various rows may also be connected one to the other in series; or the spheroids of each column may be connected in series and the various columns connected one to the other in series. In either case a spheroid at one end of the series will serve for cold water intake and a spheroid at the other end of the series will serve for hot water delivery, and no headers are required. Alternatively, there may be a parallel-row connection in which the spheroids of each row are connected in series and the various rows are connected in parallel by means of vertical headers replacing the horizontal headers 22, 23.

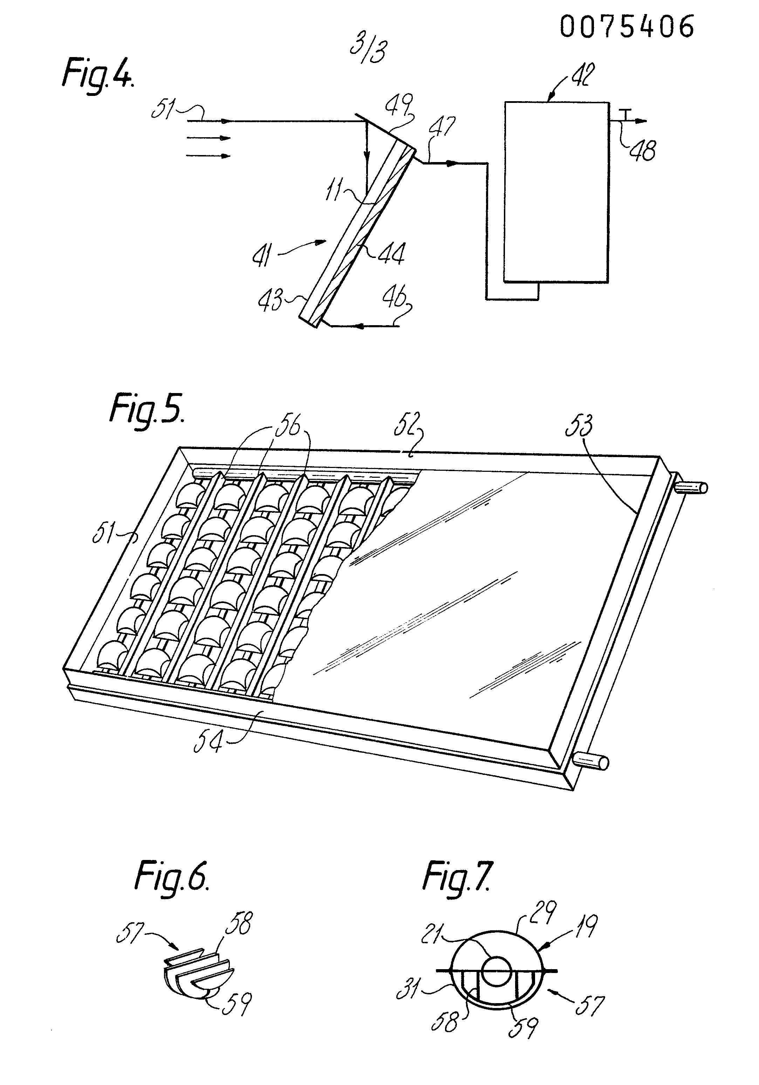

One of the critical features is shown in Fig. 3 from which it can be seen that the shape of the spheroid is such that the sun's rays are focused onto a heat-absorbing bottom portion of the fluid container.

As shown, particularly in Fig. 3, the individual spheroid is made up of two portions, a top portion 29 and a bottom portion 31. The two portions of the spheroid represent two portions of the matrix where each portion of the matrix is a moulded unit. The portions are attached together to form the spheroidal fluid-containing sections and the cylindrical communicating sections.

The top portion 29 is comprised of a diathermanous and transparent material through which the sun-light and heat readily pass. The bottom portion 31 of the spheroid is on the other hand athermanous and opaque and traps the heat within the matrix. In a preferred embodiment the athermanous and opaque characteristics are obtained by the use of a special black coating, or by use of a polycarbonate or a black coloured resin such as Teflon (Registered Trade Mark). Such materials also prevent precipitates from depositing on the surface, thereby maintaining the original efficiency of the units.

The flange portions 32, 34 and 33, 35 respectively are glued or heat-welded together to form the energy absorber from the two matrix parts.

In Fig. 3 the sun's rays at one part of the day are shown as rays 36 and 37 focusing on one portion of surface 31, rays 38 and 39 being rays of the sun in a different part of the day also focusing on the heat-absorbing surface 31. The heat absorbing surface 31 is heated, and by conduction it heats the fluid that is in the spheroid. The solar rays also heat the water through radiation effects. The air trapped between the transparent cover plate and the insulated back of the solar collector also heats the fluid in the spheroid through convection. Because of the spheroidal shape of the fluid container there is a much greater area exposed to the heat of conduction, convection and radiation in this unique energy absorber. The spheroid always presents a focusing surface to the incident rays.

Fig. 4 shows the complete solar collector system comprising the solar collector 41 in accordance with the invention, and the hot or heat-exchanger tank 42. The solar collector 11 is shown as comprising a transparent cover 43 and an insulated base 44. As is the case with planar collectors, the collector 11 is usually set at an angle of 45° to the horizontal. The solar energy absorber matrix 15 is an integral part of the solar collector system 41. The cold water inlet is shown as 46 and the heated water outlet is shown as 47, connected to the inlet of tank 42. The outlet of

- 8 -

the tank is shown at 48. It should be understood that the system is ideal for industrial applications.

Reflecting means such as mirror 49 may be provided to further increase the acquisition angle of the solar collector system using energy absorber 11. Rays from the sun are shown schematically at 51 and it is seen that some of the incoming radiation impinges on the collector directly while some is reflected thereon by mirror 49. The air trapped between the transparent top plate 43 and the insulating base plate 44 is heated by radiation and then provides heat of convection to heat up the fluid within the absorber unit.

Fig. 5 shows the use of mirror or reflecting surfaces 51 to 54 surrounding the energy collector with additional reflectors such as reflectors 56 between columns of spheroids, to maximize the use of the radiant energy.

Fig. 6 shows a battery 57 of reflecting plates shaped to fit within the spheroids to maximize the conversion of radiant energy to heat. The plates such as plate 58 are affixed together by means such as mounting link 59.

As shown in Fig. 7, the plates 58 of Fig. 6 inside a spheroid 19 reflect the radiation to elongate the radiant path through the fluid inside the spheroid. They also act to trap the heat in the fluid by elongating the exit path. In addition the plates present large heated surfaces to the heat-collecting fluid.

In practice the unique energy absorber is manufactured by moulding two plates each having partial spheroids and interconnecting partial cylindrical portions. When the two sections are attached to each other by glueing, heat welding or any other method well known to those skilled in the art, the matrix arrangement

- 9 -

of Fig. 1 is provided. It is easily assembled, light in weight and extremely efficient as a heat absorber. Also, the additional topographical elevation provided by the spheroids increases the acquisition angle of the collector such that the collector can be used in a position normal to the horizon and/or without a transparent cover.

While the principles of the invention have been described above in connection with specific apparatus and applications, it is to be understood that this description is made by way of example only and not as a limitation on the scope of the invention defined by the claims.

In the embodiment of the invention specifically shown and described herein, the heat carrier fluid is a liquid, in this case water and the heated water is consumed directly. Instead it is also possible in accordance with the invention to have the heat carrier fluid circulate in a closed cycle in indirect heat exchange with a different fluid for consumption. In such a case the heat carrier fluid may be non-aqueous, e.g. oil or any aqueous or non-aqueous emulsion.

CLAIMS


1. An energy absorber for a solar energy collector comprising inlet and outlet means (24, 26) for a heat carrier fluid, characterized by a matrix of hollow rigid spheroids (17, 18, 19) each having a light-admitting portion (29) and an energy absorbent portion (31), said portions (29, 31) being so designed that incident light radiation is focused onto said energy-absorbent portion (31) by said light-admitting portion (29).

2. An energy absorber according to claim 1, characterised in that in the light-admitting portion (29) of each spheroid (17, 18, 19) is also diathermanous.

3. An energy absorber according to claim 1 or 2, further characterized by comprising reflector means (56,58) adapted to increase the amount of incident solar radiation.

4. An energy absorber according to claim 3, characterized in that each spheroid comprises a plurality of built-in, spaced apart reflector plates (58).

5. An energy absorber according to any one of claims 1 to 4, characterized in that said matrix is made up of two complementary flat portions.

6. An energy absorber according to any one of claims 1 to 5, characterized in that adjacent spheroids (17, 19) of the matrix are interconnected by cylindrical passages (21) also having a transparent light-admitting portion and an opaque heat-absorbent portion.

Fig.1.

2/3

0075406

Fig.2.

Fig.3.

0075406

**Fig.4.**

**Fig.5.**

**Fig.6.**

**Fig.7.**

**0075406**
Application number

EP 82 30 4651.1

# European Patent Office

## EUROPEAN SEARCH REPORT

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 3 929 121 (ROGERS)<br>* column 2, lines 10 to 31 *<br>-- | 1 | F 24 J 3/02 |
| X | US - A - 4 192 292 (ROOT)<br>* column 5, lines 14 to 49 ; fig. 3, 4 *<br>-- | 1,3 | |
| A | DE - A1 - 2 931 964 (STÜWE)<br>* fig. 1, reference 15 *<br>-- | 4 | **TECHNICAL FIELDS SEARCHED (Int.Cl. 3)** |
| A | EP - A1 - 0 017 890 (CAMERANO)<br>* page 4, line 5 to page 5, line 10 *<br>---- | 1,2,5 | F 24 J 3/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 29-11-1982 | PIEPER |

EPO Form 1503.1 06.78